# FASCICULE DE BREVET EUROPEEN

(11) **EP 2 475 261 B1**
(45) Date de publication et mention de la délivrance du brevet: **03.01.2018**
(21) Numéro de dépôt: 10774244.7
(22) Date de dépôt: 09.09.2010
(51) Int. Cl.: A23C 19/082, A23C 19/09, A23C 20/00

(54) **PROCÉDÉ DE FABRICATION D'UN PRODUIT FROMAGER AYANT UN EXTRAIT SEC INFÉRIEUR OU ÉGAL À 50% ET COMPRENANT AU MOINS UNE CÉRÉALE**
VERFAHREN ZUR HERSTELLUNG EINES KÄSEPRODUKTS MIT EINEM MILCHTROCKENMASSEANTEIL VON MAXIMAL 50% UND MIT MINDESTENS EINEM GETREIDE
METHOD FOR PRODUCING A CHEESE PRODUCT CONTAINING MILK SOLIDS LOWER THAN OR EQUAL TO 50 % AND COMPRISING AT LEAST ONE CEREAL

(30) Priorité: 09.09.2009 FR 0956137
(43) Date de publication de la demande: 18.07.2012
(73) Titulaire: Fromageries Bel, 92150 Suresnes (FR)
(72) Inventeur: CHENEVAL-PALLUD, Christophe, 39570 Perrigny (FR)
(74) Mandataire: Lavoix
(86) Numéro de dépôt international: PCT/FR2010/051881
(87) Numéro de publication internationale: WO 2011/030065

(56) Documents cités:
- WO-A1-02/47491
- WO-A1-2007/049981
- WO-A1-2008/054232
- WO-A2-03/051130
- DE-A1-102006 032 385
- US-A- 4 552 774
- US-A1- 2001 018 089
- US-A1- 2002 172 750
- US-A1- 2006 172 054

## Description

L'invention concerne un procédé de fabrication d'un produit fromager ayant un extrait-sec ≤50%, composé d'un mélange de fromage fondu et d'au moins une céréale, ainsi qu'un produit fromager susceptible d'être obtenu par ce procédé. Le produit fromager se caractérise par une longue durée de conservation, c'est-à-dire une durée de conservation pouvant atteindre 4 mois à température ambiante.

Actuellement, on trouve sur le marché des fromages fondus pour différents usages : à tartiner, à trancher, à croquer, à cuisiner, à tremper, et sous différents formats (portions triangulaires, parallélépipédiques, prismatiques, cylindriques, ou tranches, barquettes, pots, coupelles, etc...). Ces produits peuvent être natures et/ou aromatisés et éventuellement contenir des inclusions (noix, noisettes, éléments figurés, etc...).

On entend traditionnellement par « fromage fondu » les produits issus de la fonte, par traitement thermique entre 80 et 140°C, de fromages et/ou autres produits laitiers (poudre de lait entier et/ou écrémé), concentrés protéiques laitiers, matières grasses laitières et/ou végétales, etc. Du fait du choix des matières premières utilisées en formulation et de sa technologie de fabrication, cette catégorie de fromages présente de nombreux avantages notamment en raison de ses possibilités de conservation (jusqu'à 1 an), de la création d'une infinie palette de goûts et de textures, et de la bonne valeur nutritionnelle des produits adaptables aux besoins.

Dans le cadre de la présente demande le terme « fromage fondu » concernera le produit ou base fondue obtenu par le traitement thermique, à une température comprise entre 100 et 140°C, d'un mélange d'au moins une matière protéique d'origine laitière et d'au moins une matière grasse, d'origine animale et/ou végétale, en présence de sels de fonte et/ou d'autres agents émulsifiants et/ou texturants.

Si les fromages fondus ont une valeur nutritionnelle équivalente à celle des autres fromages (fromages frais, fromages à pâte cuite, fromages à pâte pressée, fromages à pâte molle, fromages à pâte persillée, fromages à pâte filée), ils présentent néanmoins certains inconvénients : leur coût, du fait du coût des matières premières entrant dans leur composition ; et la déficience en glucides complexes ou polyosides qui sont recommandés par les nutritionnistes dans le cadre d'un régime alimentaire équilibré dans lequel ils devraient représenter 50 à 55 % des apports énergétiques totaux. Le principal polyoside est l'amidon, substance de réserve des principaux végétaux. Par exemple, il représente jusqu'à 90 % de l'extrait-sec du riz.

Les principales céréales cultivées dans le monde sont le blé, le riz, le maïs, l'orge, le sorgho et le mil. Elles sont cultivées sur tous les continents, et représentent la base de la nourriture des hommes ; elles sont adaptées au climat sous lequel elles sont cultivées : blé pour des climats tempérés, riz pour des climats chauds et humides, sorgho sur des climats secs.

Elles sont consommées sous forme de graines cuites (par exemple : riz, blé, maïs) ou utilisées sous forme de farine, essentiellement transformée en différents aliments : pain issu de différentes farines, pâtes, etc...

Ainsi, le riz est la 3^{e} céréale produite dans le monde après le maïs et le blé, et elle est la première céréale consommée et la base de l'alimentation pour plus de la moitié de la population mondiale, dont elle fournit 50 % des calories. Elle est cultivée sur les 5 continents mais la production et les échanges commerciaux sont concentrés à 90 % sur le continent asiatique.

Ces céréales sont riches en polyosides sous forme d'amidon ; l'amidon est formé de 2 polymères : l'amylose et l'amylopectine. Dans les plantes cultivées et exploitées industriellement, les proportions sont de 5 à 50 % d'amylose et de 50 à 95 % d'amylopectine. Ces taux sont variables selon les espèces et dans une même espèce selon les variétés.

Les produits céréaliers ont toujours tenu un rôle important dans l'alimentation de l'enfant et de l'adulte, à la fois par leur apport énergétique et aussi notamment chez certaines populations dont ils constituent la nourriture principale par leur apport en protéines (compris entre 7 % pour le riz et 12 % pour le blé ou le sorgho). Les protéines de céréales ont une composition en acides aminés indispensables intéressante, bien qu'inférieure à celle des protéines animales du fait de leur déficit en acides aminés soufrés dont la lysine, ce qui concourt à trouver sur le marché un aliment présentant une complémentarité protéines animales/protéines végétales pour avoir un apport en quantités nécessaires de l'ensemble des acides aminés. A cet effet, une association céréales/fromage serait particulièrement appréciée.

Par ailleurs, les céréales contiennent des vitamines du groupe B (B1 ou thiamine, B2 ou riboflavine, B6 ou pyridoxine, PP ou niacine) mais sont dépourvues de vitamines A, C et D. Elles se caractérisent également par une teneur élevée en potassium (300 mg/100 g), magnésium (100-180 mg/100 g) et phosphore (300-400 mg/100 g) mais une faible teneur en calcium (20 à 60 g/100 g)

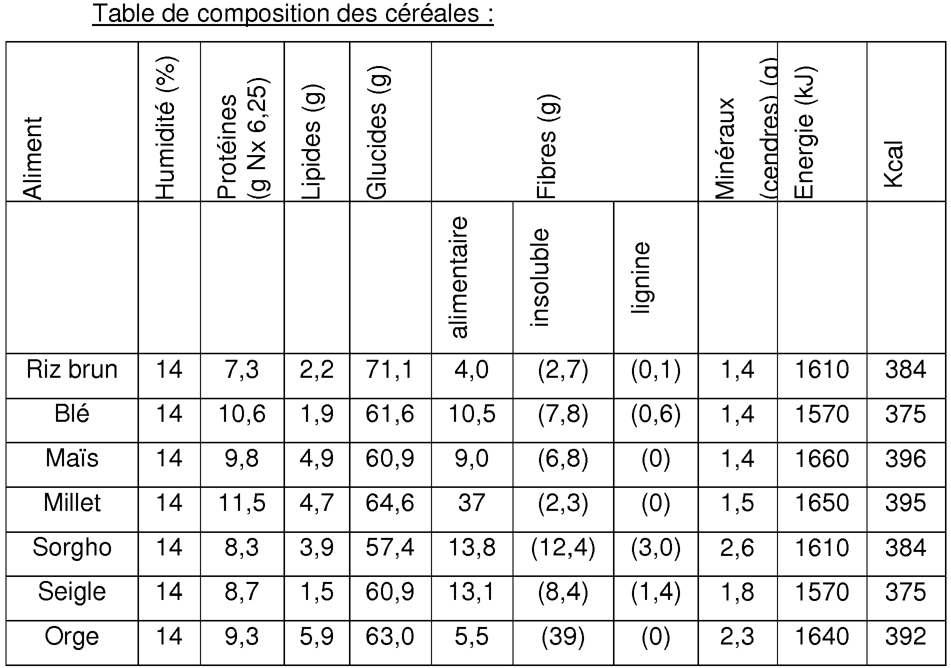

Si le fromage fondu est un produit récent (XXe siècle), le fromage produit et consommé depuis tout temps par les populations pastorales avant son industrialisation constitue un aliment de base apprécié par son apport en protéines et en calcium, et sa facilité d'usage. Par ailleurs son apport en différents acides aminés indispensables lui confère une excellente valeur biologique.

Toutefois, du fait de son déficit en polyosides dont la consommation est recommandée par les nutritionnistes, on voit tout l'intérêt de proposer un produit composite composé d'une association fromage/céréales de bonne conservation même hors froid sur tous les continents et tous les climats, facile à consommer, pratique.

On connaît déjà des produits qui associent du fromage, dont du fromage fondu, et des céréales (essentiellement du pain), l'association pouvant se faire de façon directe ou indirecte. Ces associations ont été majoritairement réalisées dans des pays laitiers où la céréale prédominante est le blé, d'où des associations majoritairement pain ou biscuit /fromages.

Comme exemples d'association directe de fromage et d'un produit céréalier tel que le pain ou autres produits dérivés du traitement du blé, on peut citer :
- les sandwiches, largement commercialisés dans les pays de consommation traditionnelle de pain et de fromages, mais ces produits, en dehors des produits congelés, ont une durée de vie très courte (< 1 semaine au froid), ils doivent souvent être préparés juste avant consommation ;
- les biscuits au fromage, mais le fromage est apporté sous forme de poudre sèche.

Dans le cadre d'une durée de conservation prolongée à l'état non congelé, il est très difficile d'associer ces deux types de produit du fait du transfert d'humidité entre le produit humide (fromage) et le produit sec (pain), en l'absence de couche intermédiaire de protection contre ce transfert. En effet, le produit céréalier perd son intégrité de goût et de texture. La demanderesse a d'ailleurs déposé une demande de brevet (FR 2 769 471) sur une association directe de fromage fondu et de produit céréalier, mais cette association nécessitait comme produit céréalier l'emploi exclusif de produits céréaliers de type génoise ou pain de mie, car ces deux produits céréaliers peuvent être consommés humides sans perdre leur intégrité. Toutefois, l'association était réduite à un type de produit céréalier et le produit fini était onéreux du fait du prix des matières premières.

Afin de résoudre ce problème de transfert d'humidité, les fabricants se sont orientés vers la commercialisation de ces deux produits, fromage et le produit céréalier, sous forme d'association indirecte, c'est-à-dire que les produits sont conditionnés dans deux compartiments séparés et ne rentrent en contact qu'au moment de la consommation. Si, par ce moyen, on évite le transfert d'humidité et on garde l'intégrité des produits, l'inconvénient réside à la fois dans la manipulation à effectuer par le consommateur au moment de la consommation, et dans les quantités d'emballage à utiliser, ce qui est dommageable pour l'environnement.

Or, il serait intéressant de proposer au consommateur un produit de bonne conservation, facile d'utilisation, associant les composantes fromagères et céréalières de façon à offrir au consommateur un produit unique alliant les valeurs nutritionnelles des céréales et du fromage. Ce produit aurait l'avantage d'améliorer la consommation en céréales des pays où elle doit être améliorée et d'apporter des protéines laitières d'excellente valeur nutritionnelle aux populations qui en sont déficitaires.

Par ailleurs, toutes les associations envisagées ont été réalisées avec des produits céréaliers déjà transformés en produits finis (pain, biscuits).

La demanderesse a montré de façon inattendue que par le choix judicieux de céréales présentant un taux d'amylose déterminé et par la mise en oeuvre d'un procédé de fabrication adapté on pouvait obtenir un produit alimentaire composite unique par simple mélange d'une base fondue et de céréale non transformée à l'état natif hydratée ou non, avec une durée de conservation prolongée, même hors froid.

Le taux d'amylose est important pour trois raisons : 1) il exerce une action sur la texture du produit fini : plus le taux d'amylose est faible, plus la texture est lisse ; 2) il influence la stabilité dans le temps : plus le taux d'amylose est faible plus le produit garde sa fermeté (moindre variabilité du taux de pénétrométrie) ; 3) un taux d'amylose bas conduit à une faible synérèse due à une moindre rétrogradation de l'amidon.

Elle a montré par ailleurs que le mélange est recommandé car la juxtaposition d'une couche de céréales et d'une couche de fromage entraîne un ramollissement de la céréale qui peut être délétère sur le plan du goût et de la texture.

L'invention concerne un produit alimentaire nutritionnellement équilibré en macronutriments constitué d'un mélange homogène de fromage fondu et d'au moins une céréale dans lequel la partie céréalière représente jusqu'à 60 % du mélange (exprimée en céréale cuite hydratée) ou jusqu'à 15 % du mélange exprimé en poids de céréale sec.

Dans le cadre de l'invention, la céréale a préférentiellement une teneur en amylose inférieure à 20%, préférentiellement encore inférieure à 10 %.

Le produit fromager selon l'invention possède un extrait-sec ≤50 %, plus spécialement compris entre 30 et 40 %, et il apporte tous les macronutriments nécessaires à la nutrition humaine, protéines, lipides et glucides dans un rapport proche des apports nutritionnels conseillés par l'OMS (Organisation Mondiale de la Santé). Les apports nutritionnels en macronutriments conseillés par l'OMS sont (exprimés en % de l'apport énergétique total) :
- apport en protéines : 12 % ;
- apport en lipides : 33 % ;
- apport en glucides dont glucides complexes : 55 %.

Le produit fromager selon l'invention, s'il peut être considéré comme un aliment de bonne valeur nutritionnelle, ne peut être considéré comme un aliment complet car il ne constitue qu'une partie du régime alimentaire.

Il est avantageusement présenté dans un emballage pratique, préférentiellement sous forme de doses unitaires de consommation (< 50 g).

La durée de conservation du produit peut atteindre 4 mois à température ambiante et *a fortiori* à une température inférieure à 15°C où elle peut atteindre 8 mois.

L'invention concerne également un procédé de fabrication dudit produit.

Les demandes de brevet internationales WO 2007/049981 et WO 2008/054232 ont décrit la fabrication de produit fromager qui implique l'utilisation d'ingrédient farineux, en particulier à base de céréales et de tubercules, et plus particulièrement de riz, jusqu'à hauteur de 10 % dans des formules pour fromages fondus. L'ingrédient est incorporé sous forme d'amidon natif et/ou de farine. La demande WO 2007/049981 décrit que l'ingrédient farineux de riz possède un taux d'amylopectine inférieur à 90 %. L'objectif est d'utiliser cet amidon ou cette farine pour remplacer partiellement la partie protéique des formules (caséine) afin d'obtenir des produits suffisamment fermes pour être tranchés, râpés, croqués, et pour les tranches, se détachant facilement de l'emballage (film plastique). L'amidon et /ou la farine de riz sont utilisés à des fins technologiques et non dans le but d'apporter au consommateur un produit de bonne qualité nutritionnelle.

Les procédés décrits dans ces demandes de brevets présentent plusieurs inconvénients :
- elles utilisent uniquement le riz sous forme de farine. Or la demanderesse par des essais en atelier pilote a montré que l'incorporation de riz sous forme de farine pouvait conférer au produit fini, selon les types de farine, une texture farineuse et des arrières goûts de farine qui sont jugés rédhibitoires pour les qualités organoleptiques du produit fini, ce qui l'a conduite à éliminer l'utilisation de farine comme matière première dans ses formulations. De plus les farines présentent souvent une faible qualité sanitaire que ce soit du point de vue microbiologique ou présence de résidus, ce qui n'est pas sans incidence sur la qualité du produit final, notamment sur sa conservation, d'autant plus si des températures de traitement thermiques plus basses sont utilisées ;- les températures maximales de traitement thermique sont limitées à 100°C pour le procédé décrit par la demande WO 2008/054232 et à 85°C pour le procédé décrit par la demande WO 2007/049981, ce qui est limitant pour la durée de conservation ;
- la farine de riz est plus onéreuse que le riz en grains.

Ces demandes ne mentionnent pas l'emploi, dans la formulation, de céréales cuites sous forme hydratées, en mélange avec une base de fromage fondu.

Par ailleurs la demande de brevet EP 1 135 028 décrit l'utilisation de riz hydraté dans la fabrication de fromages allégés, plus spécifiquement des fromages à pâte filée de type mozzarella en substitution de la matière grasse. A cet effet, le riz est cuit par traitement thermique en présence d'eau puis soumis à un fort cisaillement afin d'obtenir un mélange « liquide » à incorporer au fromage à pâte filée. Le riz cuit hydraté « liquéfié » est incorporé dans le fromage et le tout est chauffé à environ 85°C. Le fromage est alors refroidi et moulé.

La demande de brevet US 2002/017275, du même inventeur, précise que le rapport riz /eau de 1 à 2 est choisi pour permettre une complète absorption de l'eau par les grains de riz et éviter le relargage de l'eau lors du traitement de cisaillement, ce qui explique le choix de la limite supérieure de 2.

La demande de brevet US 2006/0172054 a décrit la fabrication de fromages à pâte filée allégée par un autre procédé : il s'agit d'incorporer de la farine de riz dans du caillé et de traiter le mélange selon les étapes traditionnelles de fabrication de pâte filée (traitement thermique (68-73°C), filage). La farine de riz est employée à raison de 0,5 à 10 %, préférentiellement 2 à 6 %, comme substitut de matière grasse et permet d'obtenir un produit homogène et ferme.

Les demandes EP 1 135 028 et US 2006/0172054 décrivent donc l'utilisation de farine de riz ou de riz hydraté en tant que substitut de matières grasses exclusivement en technologie pâte filée avec des quantités inférieures à 10 %. D'ailleurs, d'après la demande US 2006/0172054, des quantités supérieures à 6 % ne permettent pas d'obtenir une incorporation complète du mélange eau/riz dans le fromage. Par ailleurs, le mélange eau/riz subit un cisaillement avant incorporation sous forme « liquide » dans le fromage et, afin d'éviter tout relargage d'eau lors du traitement de cisaillement, le rapport riz/eau est limité à 1 :2 .

La présente invention est décrite plus en détail ci-dessous.

L'invention concerne un procédé de fabrication d'un produit fromager ayant un extrait-sec ≤50 %, de préférence compris entre 30 et 40 %, et comprenant un mélange d'un fromage fondu et d'au moins une céréale, ledit procédé comprenant les étapes consistant à :
a) traiter thermiquement, à une température comprise entre 100 et 145°C, de préférence entre 100 et 140°C, pendant 3 s à 6 min un mélange comprenant, en poids par rapport au poids total du mélange :
   - 5 à 40% de matière protéique d'origine laitière ;
   - 15 à 30% de matière grasse ;
   - 0,1 à 3% d'émulsifiant et/ou texturant ;
   - de l'eau ; et
   - 5 à 15 % d'au moins une céréale, exprimé en poids sec de céréale, ladite céréale étant incorporée au mélange sous forme cuite hydratée;
b) conditionner à chaud le mélange traité thermiquement, à une température comprise entre 70 et 100°C ;
c) refroidir à une température comprise entre 5 et 15°C.

L'invention est aussi relative à un procédé de fabrication d'un produit fromager ayant un extrait-sec ≤50 % et comprenant un mélange d'un fromage fondu et d'au moins une céréale, ledit procédé comprenant les étapes consistant à :
a) préparer une base de fromage fondu par traitement thermique, à une température comprise entre 85 et 140°C, de préférence entre 100 et 140°C, pendant 3 s à 6 min, d'un mélange comprenant, en poids par rapport au poids total du mélange :
   - 5 à 40 % de matière protéique d'origine laitière ;
   - 15 à 30 % de matière grasse ;
   - 0,1 à 3 % d'émulsifiant et/ou texturant ; et
   - de l'eau ;
b) mélanger ladite base de fromage fondu avec au moins une céréale cuite hydratée, ladite au moins une céréale cuite hydratée représentant jusqu'à 60 % en poids (exprimé en poids de céréale hydratée) par rapport au poids total du mélange avec la base de fromage fondu ;
c) traiter thermiquement le mélange de l'étape b) à une température comprise entre 100 et 145°C, de préférence entre 100 et 140°C, pendant 3 s à 6 min ;
d) conditionner à chaud le mélange traité thermiquement de l'étape c) à une température comprise entre 70 et 100°C;
e) refroidir à une température comprise entre 5 et 15°C.

Afin d'optimiser la valeur nutritionnelle du produit final, on peut rajouter au mélange des vitamines, des minéraux, tels que par exemple du : calcium, potassium, magnésium, zinc, fer, iode, etc. sous formes solubles ou insolubles.

De préférence, dans le mélange de l'étape a) permettant de préparer une base de fromage fondu, l'eau est quantité suffisante jusqu'à 100 % (q.s.p. 100%), c'est-à-dire que par exemple le mélange ne contient pas d'autres ingrédients que de la matière protéique d'origine laitière, de la matière grasse, un ou des émulsifiants ou texturants, et éventuellement de la farine de céréale et vitamines et/ou minéraux.

Dans les méthodes décrites ci-dessus, l'étape de traitement thermique à une température comprise entre 100 et 145°C, de préférence entre 100 et 140°C, peut être par exemple conduite pendant 30 s à 6 min.

La température de traitement thermique de l'étape a) est comprise entre 85 et 140°C, avantageusement entre 110 et 140°C, pendant une durée de 3s à 6 min, de préférence 30 s à 6 min.

La céréale cuite hydratée incorporée dans la base de fromage fondu à l'étape b) aura été cuite pendant un temps et une température adaptés au type de céréale mise en oeuvre, typiquement cuisson dans l'eau bouillante ou à la vapeur à une température de 100 à 120°C pendant 15 à 60 mh, avantageusement 15 à 30 min, préférentiellement 100°C pendant 20 à 50 mh, avantageusement 20 à 25 min, avec un rapport volume de céréale / volume d'eau adapté à chaque céréale. Par exemple, le riz peut être cuit avec un rapport 1 volume de riz / 2 à 4 volumes d'eau. Par cette opération le volume du riz est multiplié par 2 à 4, et l'extrait-sec du riz fin de cuisson est compris entre 20 et 30 %. Le rapport riz/eau sera supérieur à 2 (en particulier 1 part de riz et 2 à 3 parts d'eau).

On utilise les céréales telles que trouvées en l'état dans le commerce : par exemple le riz est utilisé sous forme de riz blanchi étuvé ou non (c'est-à-dire après traitement hydrothermique d'étuvage et décorticage (élimination de l'enveloppe ligneuse) ou de riz complet ou riz cargo (conservation du péricarpe). On préférera les variétés gluantes qui ont un plus faible taux d'amylose.

La céréale est incorporée dans la base de fromage fondu en une proportion utile pour obtenir les caractéristiques nutritionnelles souhaitées du produit final, c'est à dire d'une composition permettant un apport en nutriments proche des recommandations de l'OMS (soit apport en protéines 12 %, apport en lipides 33 % et apport en glucides 55 % de l'énergie totale). A titre d'exemple, une formule apportant 12 % de protéines, 32-33 % de lipides et 55 % de glucides sera constituée par un mélange composé de 60 % de riz cuit (teneur en riz sec = 15 %) et 40 % de base fondue.

Généralement, la proportion de céréale cuite hydratée ne dépassera pas 60 % en poids par rapport au poids total du mélange avec la base de fromage fondu. De préférence la proportion de céréale cuite hydratée sera comprise entre 30 et 50 % du poids total du mélange avec la base de fromage fondu. L'extrait sec de la céréale cuite hydratée est généralement compris entre 20 et 35 %, plus spécifiquement 22-28 %.

La cuisson du mélange de fromage fondu et de céréale hydratée peut être effectuée à une température de 100°C pendant quelques minutes, jusqu'à 145°C, ou encore 140 ° C, pendant quelques secondes, typiquement entre 100-145°C pendant 3 s à 6 min, ou encore 100-140°C pendant 30 s à 6 min, et préférentiellement entre 110 et 140°C pendant 3s à 6 min,. Le traitement thermique est effectué sous agitation (800 à 3000 rpm, préférentiellement 1500 à 2000 rpm) dans des équipements classiques utilisés en technologie de fromage fondu, soit des appareils de cuisson en batch de type cutter (par exemple ceux commercialisés par la firme Stephan®) ou des appareils de traitement thermique en continu de type stérilisateur UHT.

Le mélange est ensuite refroidi à la température de conditionnement comprise entre 70 et 100°C, de préférence entre 75 et 95°C.

L'avantage de ce procédé est qu'il peut permettre de retrouver dans le produit fini les grains de céréales créant ainsi un contraste de texture originale.

Dans les procédés selon l'invention, le produit conditionné à chaud est refroidi jusqu'à une température de 5 à 15°C.

Il peut se conserver jusqu'à 4 mois à température ambiante ou jusqu'à 8 mois au froid (4-10°C).

Dans les procédés selon l'invention, on peut utiliser un mélange de céréales, ou un mélange d'au moins une céréale avec d'autres sources végétales telles que des légumineuses cultivées pour leurs graines, des fruits, etc..., ces dernières étant en quantité inférieure à 2 % en poids sec. Les légumineuses cultivées pour leurs graines regroupent selon la classification de la FAO haricots secs, fèves sèches, pois secs, pois chiche, mongette, pois d'Angola, lentille cultivée, pois bambara, vesce commune, et lupins. Dans le cadre de la présente demande du soja peut également être utilisé en tant qu'autre source végétale.

Les céréales seront choisies parmi celles disponibles sur les marchés et largement consommées dans le monde tels que le blé, l'orge, le maïs, le riz ; ce dernier sera préférentiellement choisi pour son universalité de consommation, sa disponibilité mondiale et la faible teneur en amylose de certaines variétés. On peut également utiliser des céréales plus locales, telles que le quinoa (Amérique du Sud), le mil ou le sorgho (Afrique). On utilise aussi préférentiellement les céréales disponibles sur les marché locaux où le produit sera commercialisé (riz en Asie, quinoa en Amérique du Sud , mil et sorgho en Afrique, blé en Europe, maïs en Amérique du Nord, etc...).

Préférentiellement, on choisira les céréales parmi celles qui ont un taux d'amylose inférieur à 20 %, plus spécifiquement inférieur à 10 %.

En jouant sur le rapport amylose/amylopectine de(s) céréale(s) utilisée(s) et sur les paramètres temps/température/vitesse de cisaillement du procédé de fabrication, on pourra obtenir toute une gamme de produits aux qualités de consistance et de textures variables.

La matière protéique d'origine laitière est sélectionnée dans le groupe constitué de poudre de lait entier, de poudre de lait écrémé, de caséines, de caséinates, de concentrés protéiques laitiers, de concentrés de protéines sériques, de fromages frais ou affinés, de caillés, de yaourts, de laits fermentés, et d'un mélange de ces matières protéiques d'origine laitière. Elle est comprise entre 5 et 40% de la formule.

L'ensemble de ces matières premières est bien connu de l'homme de métier et est largement disponible sur le marché mondial. On peut citer les produits commercialisés par Fonterra, Aria Foods. Leur technologie de fabrication est également décrite dans Vignola C. : Science et Technologie du lait Ed Polytechnique de Montréal 2002*.*

La matière grasse est d'origine animale, d'origine végétale ou est un mélange de matières grasses d'origines animale et végétale.

Comme matières grasses animales, on peut citer la matière grasse laitière, la matière grasse laitière anhydre, le beurre, la crème. Comme matières grasses végétales, on peut citer l'huile de soja, de tournesol, de palme, palmiste, de coprah, d'arachide, de colza et toute huile végétale utilisée dans la fabrication de produits alimentaires et disponible sur le marché. La quantité de matière grasse utilisée dans la formule est comprise entre 15 à 30 %.

Les émulsifiants/texturants seront préférentiellement des sels de fonte bien connus de l'homme de métier, tels que les polyphosphates de sodium, potassium ou les citrates de sodium, potassium ; mais aussi d'autres émulsifiants tels que les Datem (esters diacétyl-tartrique de mono-diglycérides, SSL et CSL (Lactylates stearoyl de sodium ou de calcium). Ils sont utilisés seuls ou en mélange et incorporés dans la formule à une teneur comprise entre 0,1 et 3 %, préférentiellement entre 0,5 et 2 %.

On pourra utiliser des hydrocolloïdes tels que les carraghénanes, le guar, la caroube, la gomme xanthane, de l'amidon et tout autre texturant bien connu de l'homme de métier.

On pourra également ajouter à la formule des vitamines ou des oligo-éléments de façon à en améliorer les propriétés nutritionnelles.

Dans les procédés selon l'invention, la base de fromage fondu est réalisée par traitement thermique du mélange de matière protéique d'origine laitière, matière grasse, émulsifiant et/ou texturant, eau et éventuellement farine de céréale, sous agitation (jusqu'à des vitesses de 1500 rpm) dans les équipements classiques utilisés en technologie de fromage fondu, soit des appareils de type cutter (par exemple ceux commercialisés sous marque Stephan®) ou des appareils de type pétrin, mélangeur, malaxeur, cuiseur-mélangeur, co-malaxeur, extrudeur.

Dans des modes de réalisation préférés de l'invention, une base de fromage fondu est réalisée à partir de concentrés protéiques en poudre (7,5%), de 30 % d'un mélange 50/50 de matières grasse laitière et de matière grasse végétale, de 1 % de polyphosphates de sodium, et d'eau q.s.p. 100%. La base de fromage fondu est alors mélangée à du riz sous forme de grains de riz blanchis et hydratés selon les proportions de 80 % de fromage fondu, 20 % de riz blanchi et hydraté, en poids). Le produit obtenu a un extrait-sec de 40 %, une teneur en protéines de 6 %, en lipides de 26 % et en polyosides de 6 % (exprimé en poids sec).

L'invention concerne aussi un produit fromager susceptible d'être obtenu par un procédé selon l'invention.

Le produit fromager selon l'invention présente un extrait-sec ≤50 %, de préférence compris entre 30 et 40%, et comprend en poids sec au moins 85 % de fromage fondu.

En particulier, le produit fromager selon l'invention pourra comprendre (en poids par rapport au poids du produit fromager) :
5-10% de matière protéique d'origine laitière ;
10-30% de matière grasse ;
0,1-3% d'émulsifiant et/ou texturant ;
5-15 % d'au moins une céréale ;
eau en complément à 100%.

On voit tout l'intérêt de ces produits fromagers de part les innombrables possibilités offertes par l'association judicieuse de matières premières laitières et céréalières tant d'un point de vue nutritionnel, que goût et texture.

Quant au goût, il peut être décliné en une vaste palette adaptable à souhait au goût des populations auxquelles l'aliment est destiné, soit par le choix des matières premières notamment laitières, soit par ajout d'arômes spécifiques à dominante sucrée (fruits, sucre, vanille, etc...) ou salée (arôme fromage) selon le cas. On peut également facilement ajouter des épices, des aromates, des éléments figurés (grain de poivre, de cumin, brisures de noix, d'amandes, etc...).

Les produits finaux obtenus peuvent présenter des textures très variées selon l'usage de consommation souhaité : à croquer, à tartiner, à sucer, à trancher ; de façon générale le produit aura une fermeté comprise entre 20 et 150 g mesuré par un appareil Stevens. A cet effet, on utilise pour la mesure une sonde cylindrique de diamètre 6,35 mm, vitesse de 0,2 mm/s et une profondeur de 7 mm. La mesure est effectuée sur un échantillon à 20°C. Le résultat est le pic de pénétrométrie (valeur maximale) qui traduit la fermeté du produit. Pour un produit à tartiner, cette valeur est comprise entre 50g et 80 g, pour un produit à croquer elle sera supérieure à 150 g.

Le produit fini peut-être emballé sous différents conditionnements : pot, barquette, sachet souple, tranches, portions, dosette, boudins, etc... Dans un même conditionnement, on peut doser des produits homogènes en goût et en texture ou doser différentes couches de produit, de goût, de texture et de couleur différente. On peut également envisager une alternance d'au moins une couche de produit selon l'invention et d'au moins une couche de fromage fondu.

Un conditionnement avantageux consistera en un sachet souple en matériau étanche représentant une dose de produit à consommer en toute occasion. L'avantage de le présenter en monodose réside dans la praticité et dans le fait qu'il n'y a pas de risque de recontamination après ouverture puisque la consommation est immédiate et totale. Le produit peut présenter une texture semi-liquide à sucer ou ferme à croquer.

Par ailleurs, du fait du procédé utilisé (traitement thermique pouvant atteindre 145°C) et du conditionnement à chaud (70°C ou plus) on obtient une sécurité alimentaire optimale, et une durée de conservation pouvant atteindre 4 mois à température ambiante, et *a fortiori* à une température inférieure à 15°C, du fait de l'absence d'une flore microbiologique d'altération.

Que ce soit par le choix des matières premières et ingrédients d'origine, qui permettent d'obtenir une infinie palette de goûts et de textures, par le procédé de fabrication et de conditionnement choisi, le nouveau produit selon l'invention est de toutes les façons un produit adapté, adaptable et façonnable à tous les consommateurs et à toutes les cultures. Il est adapté à tous les modes de consommation car il ne se positionne pas dans un cadre précis étant adaptable à tout lieu et à toute façon de le consommer : à la maison, à l'école, en restauration collective ou dans la rue.

L'invention est également illustrée par les exemples suivants qui n'en limitent pas la portée.

### EXEMPLES

### Exemple 1 : fromage fondu contenant du riz

On réalise des produits selon quatre formules présentées dans le Tableau 1.

**Tableau 1 : Composition des formules A-D.**

| Composition (pondéral) | **A** | **B** | **C** | **D** |
|---|---|---|---|---|
| Matière Grasse Végétale | 15,65 | 15,61 | 21,95 | 14,30 |
| Beurre | | | | 14,00 |
| Concentré de protéines laitières | 8,84 | 13,50 | 7,49 | 7,72 |
| Riz sec | 10,00 | | 10,00 | 5,00 |
| Farine de riz | | 5,00 | | |
| Sel de cuisine | 0,50 | 0,50 | 0,50 | 0,50 |
| Sels de fonte | 1,00 | 1,00 | 1,00 | 1,00 |
| Acide citrique | 0,20 | 0,20 | 0,20 | 0,20 |
| Carraghénanes | 0,50 | 0,50 | 0,50 | 0,50 |
| Eau | 63,31 (dont 30% d'eau de cuisson du riz) | 63,68 | 58,36 (dont 30% d'eau de cuisson du riz) | 56,78 (dont 30% d'eau de cuisson du riz) |
| Total | 100 | 100,00 | 100 | 100 |

Les produits A, C et D sont réalisés selon le procédé suivant :
- préparation d'un mélange constituée, dans les proportions indiquées par le tableau, d'une source protéique (concentré protéique laitier), de matière grasse, de sels de fonte, d'acide citrique, de carraghénanes , de riz préalablement cuit dans les conditions suivantes ; cuisson de 10 g de riz sec (pour 100 g de produit) dans 30 g d'eau à 100°C pendant 50 min dans l'eau dans un rapport de 1 volume de riz pour 3 volumes d'eau ; et d'eau (complément à 100%).; Pour A et B la quantité de riz est de 40 % du mélange , pour D elle est de 20%.
- traitement thermique du mélange sous agitation (1000 rpm) à 145°C pendant 3 s
- refroidissement du mélange à 90°C et conditionnement à chaud directement dans un sachet souple contenant 30 g de produit ;
- refroidissement jusqu'à 10°C.

Le produit B est réalisé selon le procédé suivant :
- mélange des ingrédients de la formule B selon les proportions indiquées dans le tableau 1 et traitement thermique sous agitation (1000 rpm) à 100°C pendant 2 min dudit mélange ; la cuisson s'effectue dans un cutter commercialisé par la Société Stéphan ;
- refroidissement jusqu'a 80°C et conditionnement en barquette à chaud à cette température ;
- refroidissement jusqu'à 10°C.

Le Tableau 2 détaille les caractéristiques et teneurs en matières grasses et protéines des produits A à D.

**Tableau 2 : caractéristiques des produits A à D**

| | A | B | C | D |
|---|---|---|---|---|
| Matière sèche | 35 | 35 | 40 | 40 |
| Gras sur sec : | 45 | 45 | 55 | 65 |
| Matières grasses | 15,75 | 15,75 | 22 | 26 |
| Protéines | 6,99 | 9,90 | 6,04 | 5,89 |

Les produits A et D obtenus ont une fermeté mesurée au Stevens de 150g et une durée de conservation de 6 mois à 12°C. Ils sont destinés à une consommation du type « à croquer ».

Le produit B est un produit à tartiner avec une valeur Stevens de 60 g , et une durée de conservation de 4 mois à 12°C.

Le produit C est un produit à croquer avec une valeur Stevens de 200 g et une durée de conservation de 4 mois à température à 25°C. Ces durées de conservation sont confirmées par les résultats d'un plan de conservation, au cours duquel les produits ont été suivis à 12°C, 25°C et 30°C, sur l'évolution des critères suivants :
- Pénétrométrie
- suintement
- critères microbiologiques
- organoleptiques : texture (fermeté, tapissant en bouche, gélifié et farineux) et goût (intensité aromatique, goût de riz, rance, présence de faux goûts).

Les produits A, C et D étaient conformes pour tous les critères après 4 mois à 30°C et 6 mois à 12°C, le produit B était conforme après 4 mois à 12°C seulement.

## Revendications

1. Procédé de fabrication d'un produit fromager ayant un extrait-sec ≤50% et comprenant un mélange d'un fromage fondu et d'au moins une céréale, ledit procédé comprenant les étapes consistant à :
a) traiter thermiquement, à une température comprise entre 100 et 145°C pendant 3 s à 6 min, un mélange comprenant, en poids par rapport au poids total du mélange :
- 5 à 40% de matière protéique d'origine laitière ;
- 15 à 30% de matière grasse ;
- 0,1 à 3% d'émulsifiant et/ou texturant ;
- de l'eau ; et
- 5 à 15% d'au moins une céréale, exprimé en poids sec de céréale, ladite céréale étant incorporée au mélange sous forme cuite hydratée;
b) conditionner à chaud le mélange traité thermiquement, à une température comprise entre 70 et 100°C ;
c) refroidir à une température comprise entre 5 et 15°C.

2. Procédé selon la revendication 1, dans lequel l'étape de traitement thermique a) est réalisée à une température comprise entre 100 et 140°C pendant 30 s à 6 min.

3. Procédé selon la revendication 1 comprenant les étapes consistant à :
a) préparer une base de fromage fondu par traitement thermique, à une température comprise entre 85 et 140°C pendant 3 s à 6 min, d'un mélange comprenant, en poids par rapport au poids total du mélange :
- 5 à 40% de matière protéique d'origine laitière ;
- 15 à 30% de matière grasse ;
- 0,1 à 3% d'émulsifiant et/ou texturant ; et
- de l'eau ;
b) mélanger ladite base de fromage fondu avec au moins une céréale cuite hydratée, ladite au moins une céréale cuite hydratée représentant jusqu'à 60% en poids par rapport au poids total du mélange avec la base de fromage fondu ;
c) traiter thermiquement le mélange de l'étape b) à une température comprise entre 100 et 145°C pendant 3 s à 6 min ;
d) conditionner à chaud le mélange traité thermiquement de l'étape c) à une température comprise entre 70 et 100°C ;
e) refroidir à une température comprise entre 5 et 15°C.

4. Procédé selon la revendication 3, dans lequel les étapes de traitement thermique a) et c) sont réalisées à une température comprise entre 100 et 140°C pendant 30 s à 6 min.

5. Procédé selon la revendication 3 ou 4, dans lequel le mélange de l'étape a) comprend en outre 5 à 10%, en poids par rapport au poids total du mélange, d'au moins une farine de céréale.

6. Procédé selon l'une quelconque des revendications 2 à 5, dans lequel ladite au moins une céréale cuite hydratée présente un extrait sec compris entre 20 et 35%.

7. Procédé selon l'une quelconque des revendications 1 à 6, dans lequel le produit fromager ayant un extrait-sec ≤50% comprend un mélange de céréales.

8. Procédé selon l'une quelconque des revendications 1 à 7, dans lequel ladite au moins une céréale est sélectionnée dans le groupe constitué de riz, blé, orge, maïs, mil, sorgho, et quinoa.

9. Procédé selon l'une quelconque des revendications 1 à 8, dans lequel ladite au moins une céréale a un taux d'amylose inférieur ou égal à 10%.

10. Procédé selon l'une quelconque des revendications 1 à 9, dans lequel ladite matière protéique d'origine laitière est sélectionnée dans le groupe constitué de poudre de lait entier, de poudre de lait écrémé, de caséines, de caséinates, de concentrés protéiques laitiers, de concentrés de protéines sériques, de fromages frais ou affinés, de caillés, de yaourts, de laits fermentés, et d'un mélange de ces matières protéiques d'origine laitière.

11. Procédé selon l'une quelconque des revendications 1 à 10, dans lequel ladite matière grasse est d'origine animale, d'origine végétale ou est un mélange de matières grasses d'origines animale et végétale.

12. Produit fromager ayant un extrait-sec ≤50% et comprenant :
- 5-10% de matière protéique d'origine laitière ;
- 10-30% de matière grasse ;
- 0,1-3% d'émulsifiant et/ou texturant ;
- 5-15 % d'au moins une céréale, exprimé en poids sec de céréale, ladite céréale ayant été incorporée sous forme cuite hydratée ; et
- eau en complément à 100%.

13. Produit fromager ayant un extrait-sec ≤50% et comprenant au moins une céréale selon la revendication 12, **caractérisé en ce que** ledit produit fromager est susceptible d'être obtenu par un procédé selon les revendications 1 à 11.

## Patentansprüche

1. Verfahren zur Herstellung eines Käseprodukts, das einen Trockenauszug ≤50% hat und das eine Mischung aus einem Schmelzkäse und wenigstens einer Zerealie aufweist, wobei das Verfahren die Schritte aufweist, die bestehen aus:
a) Wärmebehandeln, bei einer Temperatur zwischen 100 und 145 °C während 3 s bis 6 min, einer Mischung, die aufweist in Gewicht bezüglich Gesamtgewicht der Mischung:
- 5 bis 40% Protein aus Milch stammend,
- 15 bis 30% Fett,
- 0,1 bis 3% Emulgator und/oder Festiger,
- Wasser und
- 5 bis 15% wenigstens einer Zerealie, ausgedrückt in Trockengewicht der Zerealie, wobei die Zerealie in gekochter hydratisierter Form in die Mischung eingebracht ist,
b) Wärmekonditionieren der wärmebehandelten Mischung bei einer Temperatur zwischen 70 und 100°C,
c) Abkühlen bei einer Temperatur zwischen 5 und 15°C.

2. Verfahren gemäß Anspruch 1, wobei der Schritt der Wärmebehandlung a) bei einer Temperatur zwischen 100 und 140°C während 30 s bis 6 min realisiert wird.

3. Verfahren gemäß Anspruch 1, aufweisend die Schritte, die bestehen aus:
a) Bereiten einer Grundlage aus Schmelzkäse durch Wärmebehandlung, bei einer Temperatur zwischen 85 und 140C° während 3 s bis 6 min, einer Mischung, die aufweist, in Gewicht bezüglich eines Gesamtgewichts der Mischung:
- 5 bis 40% Protein aus Milch stammend,
- 15 bis 30% Fett,
- 0,1 bis 3% Emulgator und/oder Festiger, und
- Wasser
b) Mischen der besagten Grundlage aus Schmelzkäse mit wenigstens einer hydratisierten gekochten Zerealie, wobei die wenigstens eine hydratisierte gekochte Zerealie bis 60% Gewicht bezüglich des Gesamtgewichts der Mischung mit der Grundlage aus Schmelzkäse aufweist,
c) Wärmebehandeln der Mischung von Schritt b) bei einer Temperatur zwischen 100 und 145°C während 3 s bis 6 min,
d) Wärmekonditionieren der wärmebehandelten Mischung von Schritt c) bei einer Temperatur zwischen 70 und 100°C,
e) Abkühlen bei einer Temperatur zwischen 5 und 15°C.

4. Verfahren gemäß Anspruch 3, wobei die Schritte zur Wärmebehandlung a) und c) bei einer Temperatur zwischen 100 und 140°C während 30 s bis 6 min realisiert werden.

5. Verfahren gemäß Anspruch 3 oder 4, wobei die Mischung von Schritt a) ferner aufweist 5 bis 10%, in Gewicht bezüglich des Gesamtgewichts der Mischung, wenigstens eines Zerealien-Mehls.

6. Verfahren gemäß irgendeinem der Ansprüche 2 bis 5, wobei die besagte wenigstens eine hydratisierte gekochte Zerealie einen Trockenauszug von zwischen 20 und 35% aufweist.

7. Verfahren gemäß irgendeinem der Ansprüche 1 bis 6, wobei das Käseprodukt, das einen Trockenauszug ≤50% hat, eine Zerealien-Mischung aufweist.

8. Verfahren gemäß irgendeinem der Ansprüche 1 bis 7, wobei die besagte wenigstens eine Zerealie ausgewählt ist aus der Gruppe, die besteht aus Reis, Weizen, Gerste, Mais, Hirse, Sorgho und Quinoa.

9. Verfahren gemäß irgendeinem der Ansprüche 1 bis 8, wobei die besagte wenigstens eine Zerealie einen Amylose-Anteil kleiner oder gleich 10% hat.

10. Verfahren gemäß irgendeinem der Ansprüche 1 bis 9, wobei das aus Milch stammende Protein ausgewählt ist aus der Gruppe, die besteht aus Vollmilchpulver, Magermilchpulver, Kaseine, Kaseinate, Milcheiweißkonzentrate, Serumproteinkonzentrate, Frisch- oder Reifekäse, Dickmilch, Joghurt, fermentierte Milch und einer Mischung dieser aus Milch stammenden Proteine.

11. Verfahren gemäß irgendeinem de Ansprüche 1 bis 10, wobei das Fett tierischen Ursprungs, pflanzlichen Ursprungs oder eine Mischung aus Fett tierischen und pflanzlichen Ursprungs ist.

12. Käseprodukt, das einen Trockenauszug ≤50% hat und aufweist:
- 5 bis 10% Protein aus Milch stammend,
- 10 bis 30% Fett,
- 0,1 bis 3% Emulgator und/oder Festiger,
- 5 bis 15% wenigstens einer Zerealie, ausgedrückt in Trockengewicht der Zerealie, wobei die Zerealie in gekochter hydratisierter Form eingebracht ist, und
- Wasser unter Komplettierung der 100%.

13. Käseprodukt, das einen Trockenauszug ≤50% hat und aufweist wenigstens eine Zerealie gemäß Anspruch 12, **dadurch gekennzeichnet, dass** das Käseprodukt erhältlich ist durch ein Verfahren gemäß den Ansprüche 1 bis 11.

## Claims

1. A method for producing a cheese product having a dry weight content ≤50% and comprising a mixture of a melted cheese and of at least one cereal, said method comprising the steps:
a) heat-treating, at a temperature comprised between 100 and 145°C for 3 s to 6 mins, a mixture comprising, by weight based on the total weight of the mixture:
- 5 to 40% of protein material of dairy origin;
- 15 to 30% of fat;
- 0.1 to 3% of an emulsifying and/or texturizing agent;
- water; and
- 5 to 15% of at least one cereal, expressed as dry weight of cereal, said cereal being incorporated to the mixture in the hydrated cooked form;
b) hot conditioning the heat-treated mixture at a temperature comprised between 70 and 100°C;
c) cooling down to a temperature comprised between 5 and 15°C.

2. The method according to claim 1, wherein the heat-treatment step a) is carried out at a temperature comprised between 100 and 140°C for 30 s to 6 mins.

3. The method according to claim 1, comprising the steps:
a) preparing a melted cheese base by heat-treating, at a temperature comprised between 85 and 140°C for 3 s to 6 mins, of a mixture comprising, by weight based on the total weight of the mixture:
- 5 to 40% of protein material of dairy origin;
- 15 to 30% of fat;
- 0.1 to 3% of an emulsifying and/or texturizing agent; and
- water;
b) mixing said melted cheese base with at least one hydrated cooked cereal, said at least one hydrated cooked cereal representing up to 60% by weight based on the total weight of the mixture with the melted cheese base;
c) heat-treating the mixture of step b) at a temperature comprised between 100 and 145°C for 3 s to 6 mins;
d) hot conditioning the heat-treated mixture of step c) at a temperature comprised between 70 and 100°C;
e) cooling down to a temperature comprised between 5 and15°C.

4. The method according to claim 3, wherein the heat treatment steps a) and c) are carried out at a temperature comprised between 100 and 140°C for 30 s to 6 mins.

5. The method according to claim 3 or 4, wherein the mixture of step a) further comprises 5 to 10%, by weight based on the total weight of the mixture, of at least one cereal flour.

6. The method according to any of claims 2 to 5, wherein said at least one hydrated cooked cereal has a dry weight content comprised between 20 and 35%.

7. The method according to any of claims 1 to 6, wherein the cheese product having a dry weight content ≤50% comprises a mixture of cereals.

8. The method according to any of claims 1 to 7, wherein said at least one cereal is selected from the group consisting of rice, wheat, barley, maize, millet, sorghum and quinoa.

9. The method according to any of claims 1 to 8, wherein said at least one cereal has an amylose content of less than or equal to 10%.

10. The method according to any of claims 1 to 9, wherein said protein material of dairy origin is selected from the group consisting of full milk powder, skimmed milk powder, caseins, caseinates, dairy protein concentrates, serum protein concentrates, fresh or aged cheeses, curds, yoghurts, fermented milks, and a mixture of these protein materials of dairy origin.

11. The method according to any of claims 1 to 10, wherein said fat is of animal origin, of plant origin or is a mixture of fats of animal and plant origins.

12. A cheese product having a dry weight content ≤50% and comprising:
- 5-10% of protein material of dairy origin;
- 10-30% of fat;
- 0.1-3% of emulsifying and/or texturizing agent;
- 5-15% of at least one cereal, expressed as dry weight of cereal, said cereal having been incorporated in a hydrated cooked form; and
- water as the balance to 100%.

13. A cheese product having a dry weight content ≤50% and comprising at least one cereal according to claim 12, **characterized in that** said cheese product may be obtained by a method according to claims 1 to 11.
